# EUROPÄISCHE PATENTSCHRIFT

(11) **EP 4 332 046 B1**
(45) Veröffentlichungstag und Bekanntmachung des Hinweises auf die Patenterteilung: **29.10.2025**
(21) Anmeldenummer: 22193528.1
(22) Anmeldetag: 01.09.2022
(51) Int. Cl.: B66B 13/26, G01V 8/20

(54) **REVERSIONSDETEKTION FÜR EINE AUFZUGSKABINENTÜR**
REVERSING DETECTION FOR AN ELEVATOR CAR DOOR
DÉTECTION DE L'INVERSION POUR UNE PORTE DE CABINE D'ASCENSEUR

(43) Veröffentlichungstag der Anmeldung: 06.03.2024
(73) Patentinhaber: Cedes AG, 7302 Landquart (CH)
(72) Erfinder: WEN, Jianyong, 7320 Sargans (CH)
(74) Vertreter: RavensPAT Patentanwälte Partnerschaft mbB

(56) Entgegenhaltungen:
- EP-A1- 2 362 242
- EP-A1- 2 362 243
- EP-A1- 3 239 744

## Beschreibung

Die Erfindung betrifft ein Lichtgitter für die Montage an einer Schiebetür, insbesondere einer Aufzugskabinentür.

Aus dem Stand der Technik sind Lichtgitter der genannten Art bekannt, die zur Detektion von Objekten zwischen der Senderleiste und der Empfängerleiste ausgebildet sind. So ist beispielsweise aus der EP 2 362 243 A1 ein optoelektrischer Sensor bzw. ein Verfahren bekannt, Lichtsensor und ein Verfahren zur Montage eines solchen Lichtsensors, der dazu ausgebildet ist anhand des Empfangssignal festzustellen, ob ein Lichtstrahl unterbrochen ist.

Es ist Aufgabe der Erfindung, einen verbessertes Lichtgitter bereit zu stellen.

Diese Aufgabe wird, ausgehend von einem Lichtgitter der eingangs genannten Art, durch eine Lichtgitter nach Anspruch 1, einer Schiebetür nach Anspruch 7 und einem Aufzug nach Anspruch 8 gelöst. Vorteilhafte Ausgestaltungen sind in den weiteren abhängigen Ansprüchen angegeben.

Das erfindungsgemäße Lichtgitter ist ein Lichtgitter für die Montage an einer Schiebetür, insbesondere einer Aufzugskabinentür zur Objektdetektion und zur Bestimmung periodischer Türbewegungen mit mindestens einem Senderelement an einer Senderleiste welche Strahlung mit einer bestimmten Intensität aussenden, mit mindestens einem Empfängerelement an einer Empfängerleiste welche die Strahlung eines zugeordneten Senderelements empfangen, und mit einer Steuereinrichtung zur Auswertung der Empfängerelemente auf Unterbrechung der von einem zugeordneten Senderelement kommenden Strahlung und zur Ausgabe eines Signals zur Objekterkennung bei Unterbrechung, wobei mindestens ein Empfängerelement dazu ausgebildet ist, einen Intensitätswert für die empfangene Strahlung auszugeben und die Steuereinrichtung dazu ausgebildet ist den Intensitätswert auszuwerten und getrennte hohe, mittlere und niedrige Intensitätswertbereiche mit hohem, mittleren und niedrigem Intensitätswerten zu unterscheiden, wobei der Übergang zwischen niedrigem und mittlerem Intensitätsbereich durch einen vorbestimmten ersten Grenzwert und der Übergang zwischen mittlerem und hohem Intensitätsbereich durch einen vorbestimmten zweiten Grenzwert festgelegt ist, und eine Wechselphase mit mindestens einem Wechseln vom niedrigem über den mittlerem zum niedrigen Intensitätswertbereich zu erkennen und bei erkannter Wechselphase ein Signal auszugeben.

Dies kann den Vorteil ausbilden, dass ein Reversieren der Schiebetür erkannt wird. Dies kann den Vorteil ausbilden, dass eine defekte Schiebetür erkannt wird. Dies kann den Vorteil ausbilden, dass eine verschmutzte Schiebetür erkannt wird.

Die Steuereinrichtung kann sich auch auf ausserhalb des Lichtgitters erstrechen und etwa die Auswertung und die Ausgabe des Signals nach Datenübertragung auch auf einem externen Server vollziehen.

Vorzugsweise ist die Steuereinrichtung dazu ausgebildet, dass die Wechselphase mindestens einen direkten Wechsel von niedrigem über den mittleren zum niedrigen Intensitätsbereich ohne dazwischen liegenden Intensitätswert aus dem hohen Intensitätswertbereich aufweist, und/oder für die Wechselphase eine maximal zulässige Wechselphasendauer definiert ist bis zu der sie als Wechselphase gilt, und/oder die Wechselphase mehrere, insbesondere mindestens drei Wechsel vom niedrigem über den mittlerem zum niedrigen Intensitätswertbereich aufweist, und/oder die Wechselphase mehrere periodische Wechsel vom niedrigem über den mittlerem zum niedrigen Intensitätswertbereich aufweist, und/oder die periodischen Wechsel unmittelbar aufeinander folgen, und/oder für periodische Wechsel eine maximale Wechselphasenperiodendauer definiert ist bis zu der periodische Wechsel als Wechselphase gelten.

Dies kann den Vorteil ausbilden, dass die Erkennung einer reversierenden und/oder defekten und/oder verschmutzten Schiebetür besonders präzise erfolgt.

Vorzugsweise ist die Steuereinrichtung dazu ausgebildet, dass das Signal die Anzahl der periodischen Wechsel beinhaltet und/oder das Signal die Dauer der periodischen Wechsel beinhaltet.

Dies kann den Vorteil ausbilden, dass eine besonders detaillierte Auswertung des Türzustandes erfolgen kann.

Vorzugsweise ist die Steuereinrichtung dazu ausgebildet, dass der hohe Intensitätswertbereich dem Bereich geringer Distanz, insbesondere einer geschlossenen oder wenig geöffneter Aufzugskabinentür entspricht, der mittlere Intensitätswertbereich dem Bereich mittlerer Distanz, insbesondere einer teilweise geöffneten Aufzugskabinentür entspricht, der niedrige Intensitätswertbereich dem Bereich hoher Distanz, insbesondere einer weit oder ganz geöffneten Aufzugskabinentür entspricht und die Bereiche geringer, mittlerer und hoher Distanz getrennt aufeinander, insbesondere unmittelbar aufeinander folgen.

Dies kann den Vorteil ausbilden, dass eine besonders definierte Auswertung erfolgen kann.

Vorzugsweise weist das Lichtgitter eine Einrichtung zur drahtlosen Übertragung des Signals auf.

Dies kann den Vorteil ausbilden, dass der Empfang des Signals oder die Auswertung und die Ausgabe des Signals nach Datenübertragung auch auf einem externen Server vollzogen werden kann.

Vorzugsweise ist die Senderleiste und/oder die Empfängerleiste zur Montage an einer Schiebetür, insbesondere einer Aufzugskabinentür vorgesehen.

Dies kann den Vorteil ausbilden, dass eine erleichterte Montage möglich ist.

Die erfindungsgemässe Schiebetür, insbesondere Aufzugskabinentür ist eine Schiebetür, insbesondere Aufzugskabinentür mit einem erfindungsgemässen Lichtgitter wie vorstehend beschrieben. Die Senderleiste und/oder die Empfängerleiste ist dabei an einem Türblatt befestigt.

Dies kann die vorgenannten Vorteile ausbilden.

Der erfindungsgemässe Aufzug ist ein Aufzug mit einem erfindungsgemässen Lichtgitter wie vorstehend beschrieben.

Dies kann die vorgenannten Vorteile ausbilden.

Weitere Merkmale der Erfindung sind in den Zeichnungen angegeben.

Die jeweils genannten Vorteile können sich im Schutzumfang der beigefügten Ansprüche auch für Merkmalskombinationen realisieren in deren Zusammenhang sie nicht genannt sind.

### Überblick über die Zeichnungen:

Ausführungsbeispiele der Erfindung sind in den Zeichnungen dargestellt und werden im Folgenden näher erläutert. Gleiche Bezugszeichen in den einzelnen Figuren bezeichnen dabei einander entsprechende Elemente. Es zeigen:
- Fig. 1: Lichtgitter
- Fig. 2a: Geöffnete Doppelschiebetür einer Aufzugskabine
- Fig. 2b: Halb geöffnete Doppelschiebetür einer Aufzugskabine
- Fig. 2c: geschlossene Doppelschiebetür einer Aufzugskabine
- Fig. 3a: Abstandskurve einer normal schliessenden Schiebetür
- Fig. 3b: Abstandskurve einer reversierend schliessenden Schiebetür
- Fig. 4a: Intensitätskurve einer normal schliessenden Schiebetür
- Fig. 4b: Intensitätskurve einer reversierend schliessenden Schiebetür

### Detaillierte Beschreibung der Zeichnungen:

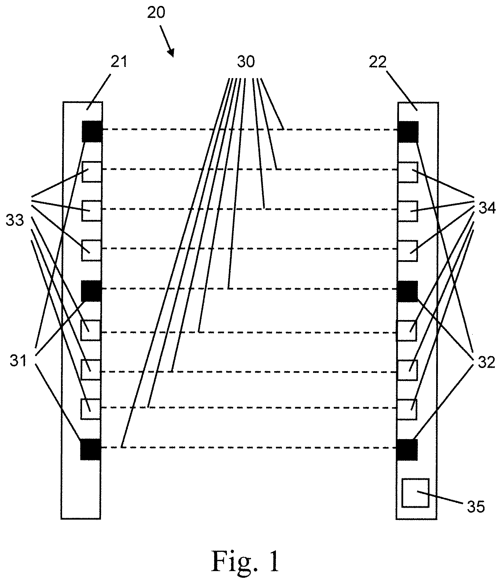

Fig. 1 zeigt ein erfindungsgemässes Lichtgitter 20 mit der Senderleiste 21 und der Empfängerleiste 22. Die Senderleiste 21 weist drei qualifizierte Senderelemente 31 und weitere nicht qualifizierte Senderelemente 33. Die qualifizierten Senderelemente 31 können IR-Strahlung mit einer bestimmten Intensität aussenden. Die Empfängerleiste 22 weist drei qualifizierte Empfängerelemente 32 und weitere nicht qualifizierte Empfängerelemente 34 auf. Die qualifizierten Empfängerelemente 32 können Intensitätswerte für die Intensität der empfangenen Strahlung ausgeben. Senderleiste und Empfängerleiste sind jeweils senkrecht und zueinander parallel und in gleicher Höhe gegenüberliegend angeordnet. Die Senderelemente und die Empfängerelemente bilden Lichtstrahlen 30 aus. Bei der Unterbrechung eines Lichtstrahls gibt die Empfängerleiste ein Signal für die Unterbrechung aus. Jedem qualifizierten Senderelement 31 ist in gleicher Höhe ein qualifiziertes Empfängerelement 32 zugeordnet und zusammen bilden diese einen waagrechen Senderstahl 30 aus. Das Lichtgitter 20 weist zudem eine Steuereinrichtung 35 auf.

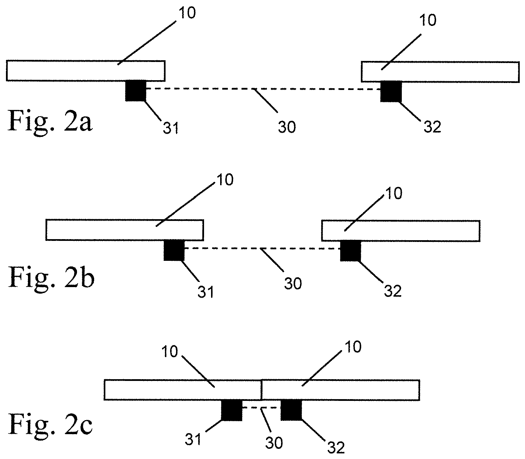

Fig. 2a bis 2c zeigen das Lichtgitter 20 der Fig. 1 an einer Doppelschiebetür 10 einer Aufzugskabine. Die Senderleiste mit den Senderelementen 31 ist an einem Flügel der Doppelschiebetür befestigt und die Empfängerleiste mit den Senderelementen 32 ist am gegenüberliegenden Flügel der Doppelschiebetür befestigt. Die sonstige Anordnung ist wie in Fig. 1. Senderleiste und Empfängerleiste bewegen sich mit den Doppelschiebetüren mit und bleiben dabei parallel und in gleicher Höhe zueinander angeordnet, sodass die Lichtstrahlen waagrecht und den entsprechenden qualifizierten Sender- und Empfängerelementen zugeordnet verbleiben. Sie verringern ihren Abstand zusammen mit den Aufzugskabinentüren, wenn die Aufzugskabinentüren sich schliessen, und sie vergrössern ihren Abstand zusammen mit den Aufzugskabinentüren, wenn die Aufzugskabinentüren sich öffnen. Der Abstand der Sender- und Empfängerleiste entspricht dem Abstand der beiden Flügel der Doppelschiebetür bis auf einen konstanten Faktor. Fig. 2a zeigt die geöffnete Tür. Fig. 2b zeigt die halb geschlossene Tür. Fig. 2c zeigt die geschlossene Tür.

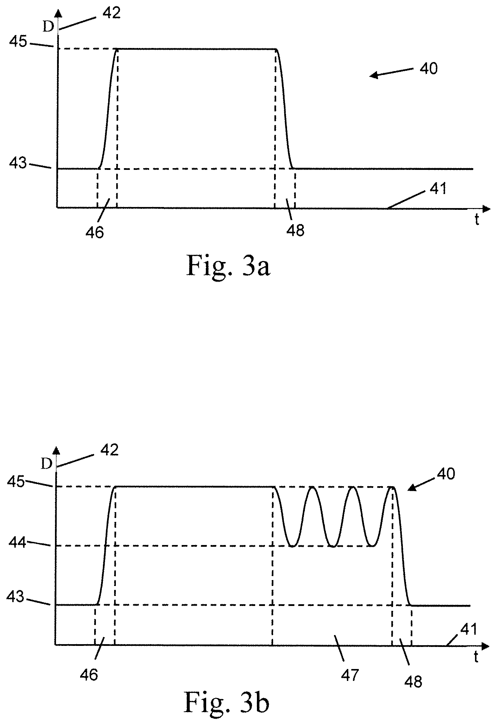

Fig. 3a zeigt ein Diagramm 40 für den Abstand zwischen Senderleiste und Empfängerleiste in Abhängigkeit von der Zeit für eine sich normal öffnende und wieder schliessenden Aufzugskabinentür gemäss Fig. 2a bis 2c.

Die X-Achse 41 zeigt den Zeitverlauf. Die Y-Achse 42 zeigt den Abstand von Senderleiste zu Empfängerleiste. Der minimale Abstand 43 ist der Abstand von Senderleiste zu Empfängerleiste bei geschlossener Aufzugskabinentür. Der maximale Abstand 45 ist der Abstand von Senderleiste zu Empfängerleiste bei vollständig geöffneter Aufzugskabinentür. Von links kommend zeigt der Kurvenverlauf die geschlossene Aufzugskabinentür, dann den Vorgang der Türöffnung 46, dann eine Zeit bei vollständig geöffneter Aufzugskabinentür mit maximalem Abstand 45, dann den Vorgang der Tür-Schliessung 48 und endlich den Zustand der geschlossenen Aufzugskabinentür mit wiederum dem minimalen Abstand 43.

Fig.3b zeigt ein Diagramm 40 gemäss Fig. 3a, jedoch mit Tür-Reversionen 47 vor dem Vorgang der Tür-Schliessung 48.

Der linke Beginn der Tür-Reversionen 47 ist ursprünglich der Beginn eines Schliessvorgangs. Jedoch erfährt die Aufzugskabinentür kurz nach diesem ursprünglichen Beginn eines Schliessvorganges einen Widerstand und öffnet sich gemäss der üblichen Einstellung der Türsteuerung wieder. Diese Reversion wiederholt sich im gezeigten Diagramm drei Mal bis beim erneuten, nun erfolgreichen Versuch der Tür-Schliessung 48 der Widerstand überwunden werden konnte und die Aufzugskabinentür tatsächlich schliesst und mit minimalem Abstand 43 geschlossen ist. Der Widerstand kann etwa durch eine verschmutzte Führungsleiste oder ein Steinchen im der Führungsleiste entstanden sein.

Während der drei Tür-Reversionen 47 schliesst die Aufzugskabinentür drei Mal teilweise und öffnet sich wieder vollständig. Dementsprechend schwankt der Abstand zwischen Senderleiste und Empfängerleiste bei den Tür-Reversionen 47 zwischen dem maximalen Abstand 45 und einem mittleren Abstand 44.

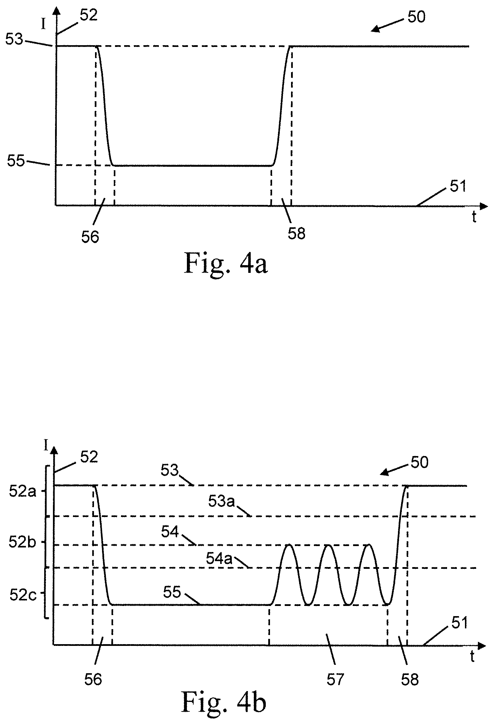

Fig. 4a zeigt ein Diagramm für den von den qualifizierten Empfängerelementen der Empfängerleiste empfangenen Intensitätswert in Abhängigkeit von der Zeit für eine sich normal öffnende und wieder schliessende Aufzugskabinentür gemäss Fig. 3a.

Die X-Achse 51 zeigt den Zeitverlauf. Die Y-Achse 52 zeigt die von den qualifizierten Empfängerelementen empfangene Intensität.

Die maximale Intensität 53 entspricht dem Abstand von Senderleiste zu Empfängerleiste bei geschlossener Aufzugskabinentür. Der minimale Intensität 55 entspricht dem Abstand von Senderleiste zu Empfängerleiste bei vollständig geöffneter Aufzugskabinentür. Von links kommend zeigt der Kurvenverlauf die geschlossene Aufzugskabinentür mit maximaler Intensität 53, dann den Vorgang der Türöffnung 56 mit einem Abfall der Intensität, dann eine Zeit bei vollständig geöffneter Aufzugskabinentür mit minimaler Intensität 55, dann den Vorgang der Tür-Schliessung 58 mit wieder ansteigender Intensität und endlich den Zustand der geschlossenen Aufzugskabinentür mit wiederum maximaler Intensität.

Fig. 4b zeigt ein Diagramm 40 gemäss Fig. 4a, jedoch mit Tür-Reversionen 57 vor dem Vorgang der Tür-Schliessung 58 gemäss Fig. 3b.

Während der drei Tür-Reversionen 57 schwankt die Intensität zwischen minimaler Intensität 55 für die vollständig geöffnete Aufzugskabinentür und einer mittleren Intensität 54 für die teilweise geöffnete Aufzugskabinentür.

Es zeigt sich, dass die minimale Intensität 55 von Revisionen der genannten Art in einem Bereich niedriger Intensität 52c bleibt und dass die mittlere Intensität 54 von Revisionen dieser Art in einem Bereich mittlerer Intensität 52b bleibt, ohne in den Bereich hoher Intensität zu gelangen. Der Übergang zwischen dem Bereich niedriger und dem Bereich mittlerer Intensität ist durch einen vorbestimmten ersten Grenzwert 54a festgelegt. Der Übergang zwischen dem Bereich mittlerer Intensität und dem Bereich hoher Intensität ist durch einen vorbestimmten zweiten Grenzwert 53a festgelegt.

Demzufolge schwankt die Intensität von Revisionen der genannten Art zwischen den angrenzenden Bereichen von niedriger Intensität 52c und mittlerer Intensität 52b ohne in den daran angrenzenden Bereich hoher Intensität 52a zu gelangen.

Die Steuereinrichtung 35 überwacht den Verlauf der Intensität und gibt ein Signal für eine mehrfache Tür-Reversion, wenn die Intensität sechs Mal unmittelbar zwischen dem Bereich niedriger Intensität 52c und dem Bereich mittlerer Intensität wechselt.

### Bezugszeichenliste:

- 10: Kabinentür
- 20: Lichtgitter
- 21: Senderleiste
- 22: Empfängerleiste
- 30: Lichtstrahlen
- 31: qualifizierte Senderelemente
- 32: qualifizierte Empfängerelemente
- 33: einfache Senderelemente
- 34: einfache Empfängerelemente
- 35: Steuereinrichtung

- 40: Abstandskurve
- 41: Zeit-Achse
- 42: Abstand-Achse
- 43: Minimaler Abstand
- 44: Mittlerer Abstand
- 45: Maximaler Abstand
- 46: Türöffnung
- 47: Tür-Reversionen
- 48: Tür-Schliessung

- 50: Intensitätskurve
- 51: Zeit-Achse
- 52: Intensitätsachse
- 52a: Bereich hoher Intensität
- 52b: Bereich mittlerer Intensität
- 52c: Bereich niedrigerer Intensität
- 53: Maximale Intensität
- 53a: Grenzwert
- 54: Mittlere Intensität
- 54a: Grenzwert
- 55: Minimale Intensität
- 56: Türöffnung
- 57: Tür-Reversionen
- 58: Tür-Schliessung

## Patentansprüche

1. Lichtgitter (20)
- für die Montage an einer Schiebetür, insbesondere einer Aufzugskabinentür (10)
- zur Objektdetektion und zur Bestimmung periodischer Türbewegungen (46, 47, 48, 56, 57, 58)
- mit mindestens einem Senderelement (31, 33) an einer Senderleiste (21)
- welche Strahlung (30) mit einer bestimmten Intensität aussenden,
- mit mindestens einem Empfängerelement (32, 34) an einer Empfängerleiste (22)
- welche die Strahlung (30) eines zugeordneten Senderelements (31, 33) empfangen, und
- mit einer Steuereinrichtung (35)
- zur Auswertung der Empfängerelemente (32, 34) auf Unterbrechung der von einem zugeordneten Senderelement (31, 33) kommenden Strahlung (30) und
- zur Ausgabe eines Signals zur Objekterkennung bei Unterbrechung, wobei
- mindestens ein Empfängerelement (32) dazu ausgebildet ist,
- einen Intensitätswert für die Intensität der empfangenen Strahlung (30) auszugeben und
- die Steuereinrichtung dazu ausgebildet ist
- den Intensitätswert (53, 45, 55) auszuwerten
- und getrennte hohe (52a), mittlere (52b) und niedrige Intensitätswertbereiche (52c) mit hohem, mittleren und niedrigem Intensitätswerten zu unterscheiden, wobei der Übergang zwischen niedrigem (52c) und mittlerem Intensitätsbereich (52b) durch einen vorbestimmten ersten Grenzwert (54a) und der Übergang zwischen mittlerem (52b) und hohem Intensitätsbereich (52a) durch einen vorbestimmten zweiten Grenzwert (53a) festgelegt ist, **dadurch gekennzeichnet dass**, die Steuereinrichtung ferner dazu ausgebildet ist
- eine Wechselphase mit mindestens einem Wechseln vom niedrigem (52c) über den mittlerem (52a) zum niedrigen Intensitätswertbereich (52b) zu erkennen
- und bei erkannter Wechselphase ein Signal auszugeben.

2. Lichtgitter (20) nach Anspruch 1, **dadurch gekennzeichnet, dass** die Steuereinrichtung (35) dazu ausgebildet ist, dass
- die Wechselphase mindestens einen direkten Wechsel von niedrigem (52c) über den mittleren (52b) zum niedrigen Intensitätsbereich (52c) ohne dazwischen liegenden Intensitätswert aus dem hohen Intensitätswertbereich (52a) aufweist, und/oder
- für die Wechselphase eine maximal zulässige Wechselphasendauer definiert ist bis zu der sie als Wechselphase gilt, und/oder
- die Wechselphase mehrere, insbesondere mindestens drei Wechsel vom niedrigem (52c) über den mittlerem (52b) zum niedrigen Intensitätswertbereich (52c) aufweist, und/oder
- die Wechselphase mehrere periodische Wechsel vom niedrigem (52c) über den mittlerem (52b) zum niedrigen Intensitätswertbereich (52c) aufweist, und/oder
- die periodischen Wechsel unmittelbar aufeinander folgen, und/oder
- für periodischen Wechsel eine maximale Wechselphasenperiodendauer definiert ist bis zu der periodische Wechsel als Wechselphase gelten.

3. Lichtgitter (20) nach einem der vorhergehenden Ansprüche, **dadurch gekennzeichnet, dass** die Steuereinrichtung (35) dazu ausgebildet ist, dass
- das Signal die Anzahl der periodischen Wechsel beinhaltet und/oder
- das Signal die Dauer der periodischen Wechsel beinhaltet.

4. Lichtgitter (20) nach einem der vorhergehenden Ansprüche, **dadurch gekennzeichnet, dass** die Steuereinrichtung (35) dazu ausgebildet ist, dass
- der hohe Intensitätswertbereich (52a) dem Bereich geringer Distanz, insbesondere einer geschlossenen (43) oder wenig geöffneter Aufzugskabinentür (10) entspricht,
- der mittlere Intensitätswertbereich (52b) dem Bereich mittlerer Distanz (44), insbesondere einer teilweise geöffneten Aufzugskabinentür (10) entspricht,
- der niedrige Intensitätswertbereich (52c) dem Bereich hoher Distanz, insbesondere einer weit oder ganz geöffneten (45) Aufzugskabinentür (10) entspricht und
- die Bereiche geringer, mittlerer und hoher Distanz getrennt aufeinander, insbesondere unmittelbar aufeinander folgen.

5. Lichtgitter (20) nach einem der vorhergehenden Ansprüche, **dadurch gekennzeichnet, dass**
- das Lichtgitter (20) eine Einrichtung zur drahtlosen Übertragung des Signals aufweist.

6. Lichtgitter (20) nach einem der vorhergehenden Ansprüche, **dadurch gekennzeichnet, dass**
- die Senderleiste (21) und/oder die Empfängerleiste (22) zur Montage an einer Schiebetür, insbesondere einer Aufzugskabinentür (10) vorgesehen ist.

7. Schiebetür, insbesondere Aufzugskabinentür (10) mit einem Lichtgitter (20) gemäss den vorhergehenden Ansprüchen.

8. Aufzug mit einem Lichtgitter (20) nach einem der vorhergehenden Ansprüche 1 bis 6
- wobei die Senderleiste (21) und/oder die Empfängerleiste (21) an der Aufzugskabinentür (10) befestigt ist.

## Claims

1. Light grid (20)
- for mounting on a sliding door, in particular an elevator car door (10)
- for object detection and for determining periodic door movements (46, 47, 48, 56, 57, 58)
- having at least one transmitter element (31, 33) on a transmitter strip (21)
- which emit radiation (30) at a specific intensity,
- having at least one receiver element (32, 34) on a receiver strip (22)
- which receive the radiation (30) of an associated transmitter element (31, 33), and
- having a control device (35)
- for analysing the receiver elements (32, 34) for interruption of the radiation (30) coming from an associated transmitter element (31, 33) and
- for outputting a signal for object identification in the event of an interruption,
wherein
- at least one receiver element (32) is designed
- to output an intensity value for the intensity of the received radiation (30) and
- the control device is designed
- to evaluate the intensity value (53, 45, 55)
- and to distinguish separate high (52a), medium (52b) and low intensity value ranges (52c) containing high, medium and low intensity values, the transition between the low (52c) and medium (52b) intensity ranges being defined by a predetermined first limit value (54a) and the transition between the medium (52b) and high (52a) intensity ranges being defined by a predetermined second limit value (53a), **characterized in that** the control device is furthermore designed
- to identify a change phase containing at least one change from the low (52c) via the medium (52a) to the low (52b) intensity value range
- and to output a signal when the change phase is identified.

2. Light grid (20) according to Claim 1, **characterized in that** the control device (35) is designed such that
- the change phase comprises at least one direct change from the low (52c) via the medium (52b) to the low (52c) intensity range without an intervening intensity value from the high intensity value range (52a), and/or
- a maximum permissible change phase duration is defined for the change phase, up to which it is considered to be a change phase, and/or
- the change phase comprises multiple, in particular at least three, changes from the low (52c) via the medium (52b) to the low intensity value range (52c), and/or
- the change phase comprises multiple periodic changes from the low (52c) via the medium (52b) to the low (52c) intensity value range, and/or
- the periodic changes directly follow one another, and/or
- a maximum change phase period duration is defined for periodic changes, up to which periodic changes are considered to be a change phase.

3. Light grid (20) according to either of the preceding claims, **characterized in that** the control device (35) is designed such that
- the signal includes the number of periodic changes and/or
- the signal includes the duration of the periodic changes.

4. Light grid (20) according to either of the preceding claims, **characterized in that** the control device (35) is designed such that
- the high intensity value range (52a) corresponds to the short-distance range, in particular to a closed (43) or slightly open elevator car door (10),
- the medium intensity value range (52b) corresponds to the medium-distance range (44), in particular to a partially open elevator car door (10),
- the low intensity value range (52c) corresponds to the long-distance range, in particular to a wide-open or fully open (45) elevator car door (10), and
- the short-, medium- and long-distance ranges follow one another, in particular directly follow one another, separately.

5. Light grid (20) according to one of the preceding claims, **characterized in that**
- the light grid (20) comprises a device for wirelessly transmitting the signal.

6. Light grid (20) according to one of the preceding claims, **characterized in that**
- the transmitter strip (21) and/or the receiver strip (22) is intended for mounting on a sliding door, in particular an elevator car door (10).

7. Sliding door, in particular an elevator car door (10), having a light grid (20) according to the preceding claims.

8. Elevator having a light grid (20) according to one of preceding Claims 1 to 6
- wherein the transmitter strip (21) and/or the receiver strip (21) is fixed to the elevator car door (10).

## Revendications

1. Barrière immatérielle (20)
- destinée à être montée sur une porte coulissante, en particulier une porte (10) de cabine d'ascenseur
- pour la détection d'objets et la détermination de mouvements périodiques (46, 47, 48, 56, 57, 58) de la porte
- comprenant au moins un élément émetteur (31, 33) sur une barre émettrice (21)
- émettant un rayonnement (30) avec une intensité déterminée,
- comprenant au moins un élément récepteur (32, 34) sur une barre réceptrice (22)
- qui reçoit le rayonnement (30) d'un élément émetteur associé (31, 33), et
- comprenant un dispositif de commande (35)
- pour évaluer les éléments récepteurs (32, 34) en cas d'interruption du rayonnement (30) provenant d'un élément émetteur associé (31, 33) et
- pour émettre un signal pour la détection d'objets en cas d'interruption,
dans lequel
- au moins un élément récepteur (32) est conçu pour
- émettre une valeur d'intensité pour l'intensité du rayonnement reçu (30) et
- le dispositif de commande est conçu pour
- évaluer la valeur d'intensité (53, 45, 55)
- et distinguer des gammes de valeurs d'intensité séparées élevées (52a), moyennes (52b) et faibles (52c) comprenant des valeurs d'intensité élevées, moyennes et faibles, la transition entre la gamme d'intensité faible (52c) et la gamme d'intensité moyenne (52b) étant définie par une première valeur limite prédéterminée (54a) et le changement entre la gamme d'intensité moyenne (52b) et la gamme d'intensité élevée (52a) étant définie par une deuxième valeur limite prédéterminée (53a), **caractérisé en ce que** le dispositif de commande est en outre conçu pour
- détecter une phase de changement comprenant au moins un passage de la gamme de valeurs d'intensité faible (52c) à la gamme de valeurs d'intensité faible (52b) en passant par la gamme de valeurs d'intensité moyenne (52a)
- et émettre un signal lorsqu'une phase de changement est détectée.

2. Barrière immatérielle (20) selon la revendication 1, **caractérisée en ce que** le dispositif de commande (35) est conçu de telle sorte que
- la phase de changement comprend au moins un changement direct depuis la gamme d'intensité élevée (52a) à la gamme d'intensité faible (52c) en passant par la gamme d'intensité moyenne (52b) vers la gamme d'intensité faible (52c), sans valeur d'intensité intermédiaire présente entre celles-ci, et/ou
- une durée maximale admissible est définie pour la phase de changement jusqu'à laquelle elle est considérée comme phase de changement, et/ou
- la phase de changement comprend plusieurs, en particulier au moins trois, changements depuis la gamme de valeurs d'intensité faible (52c) à la gamme de valeurs d'intensité faible (52c) en passant par la gamme de valeurs d'intensité moyenne (52b), et/ou
- la phase de changement comprend plusieurs changements périodiques depuis la gamme de valeurs d'intensité faible (52c) à la gamme de valeurs d'intensité faible (52c) en passant par la gamme de valeurs d'intensité moyenne (52b), et/ou
- les changements périodiques se succèdent immédiatement, et/ou
- une durée maximale de période de phase de changement est définie pour les changements périodiques jusqu'à laquelle les changements périodiques sont considérés comme une phase de changement.

3. Barrière immatérielle (20) selon l'une des revendications précédentes, **caractérisée en ce que** le dispositif de commande (35) est conçu de telle sorte que
- le signal contient le nombre de changements périodiques et/ou
- le signal contient la durée des changements périodiques.

4. Barrière immatérielle (20) selon l'une des revendications précédentes, **caractérisée en ce que** le dispositif de commande (35) est conçu de telle sorte que
- la gamme de valeurs d'intensité élevée (52a) correspond à la gamme de faible distance, en particulier à une porte (10) de cabine d'ascenseur fermée (43) ou légèrement ouverte,
- la gamme de valeurs d'intensité moyenne (52b) correspond à la gamme de distance moyenne (44), en particulier d'une porte (10) de cabine d'ascenseur partiellement ouverte,
- la gamme de valeurs d'intensité faible (52c) correspond à la gamme de distance élevée, en particulier d'une porte (10) de cabine d'ascenseur largement ou entièrement ouverte (45) et
- les gammes de distance faible, moyenne et élevée se succèdent séparément, en particulier immédiatement les unes après les autres.

5. Barrière immatérielle (20) selon l'une des revendications précédentes, **caractérisée en ce que**
- la barrière immatérielle (20) comprend un dispositif pour la transmission sans fil du signal.

6. Barrière immatérielle (20) selon l'une des revendications précédentes, **caractérisée en ce que**
- la barre émettrice (21) et/ou la barre réceptrice (22) sont prévues pour être montées sur une porte coulissante, en particulier une porte (10) de cabine d'ascenseur.

7. Porte coulissante, en particulier porte (10) de cabine d'ascenseur comprenant une barrière immatérielle (20) selon les revendications précédentes.

8. Ascenseur équipé d'une barrière immatérielle (20) selon l'une des revendications précédentes 1 à 6
- dans lequel la barre émettrice (21) et/ou la barre réceptrice (21) est/sont fixée(s) à la porte (10) de cabine d'ascenseur.
